# EUROPÄISCHE PATENTSCHRIFT

(11) **EP 1 510 705 B1**
(45) Veröffentlichungstag und Bekanntmachung des Hinweises auf die Patenterteilung: **20.06.2007**
(21) Anmeldenummer: 04020754.0
(22) Anmeldetag: 01.09.2004
(51) Int. Cl.: F16B 19/05

(54) **Befestigungsbolzen und Befestigungseinrichtung mit Befestigungsbolzen und Schliessring**
Fastening bolt and fastening device with fastening bolt and a self locking collar
Goujon de fixation et fixation avec un goujon de fixation et une bague d'arrêt

(30) Priorität: 01.09.2003 DE 10340572
(43) Veröffentlichungstag der Anmeldung: 02.03.2005
(73) Patentinhaber: Newfrey LLC, Newark, Delaware 19711 (US)
(72) Erfinder: Schwiete, Bernd, 58454 Witten (DE)
(74) Vertreter: Haar, Lucas Heinz Jörn

(56) Entgegenhaltungen:
- EP-A- 1 359 330
- WO-A-02/095244
- FR-A- 1 369 872
- US-A- 6 019 559

## Beschreibung

Die Erfindung betrifft einen Befestigungsbolzen zum Befestigen von wenigstens einem Bauteil an einem anderen mit einem Kopf und einem langgestreckten Schaft, der einen mit einem Außengewinde versehenen Befestigungsabschnitt zum Anbringen eines Schließringes und an seinem dem Kopf entgegengesetzten Ende einen Endabschnitt zum Abstützen eines Verformungswerkzeuges zum Verformen des Schließringes aufweist. Die Erfindung betrifft außerdem eine Befestigungseinrichtung umfassend einen derartigen Befestigungsbolzen und einen Schließring, der in die Gewinderillen des Befestigungsabschnittes einformbar ist.

Ein Befestigungsbolzen und eine Befestigungseinrichtung der angegebenen Art sind aus EP 0 663 535 A1 bekannt. Durch die Ausbildung des Befestigungsabschnittes mit einem Außengewinde kann hierbei der in die Gewinderillen des Befestigungsbolzens eingeformte Schließring durch Drehen nach Art einer Mutter gelöst werden

Aus GB 2 343 642 A ist weiterhin eine Befestigungseinrichtung mit Befestigungsbolzen und verformbarem Schließring bekannt, bei welcher der Befestigungsabschnitt des Befestigungsbolzens durch nebeneinander liegende Ringnuten geformte Befestigungsrillen hat, in die der Schließring einformbar ist. Ein Lösen des Schließringes ist hierbei ohne Zerstörung der Befestigungseinrichtung nicht möglich. Der Kopf des Befestigungsbolzens dieser bekannten Befestigungseinrichtung ist so gestaltet, daß er durch Schweißen an einem Bauteil befestigt werden kann. Weiterhin weist der Befestigungsbolzen eine Sollbruchstelle zwischen dem Befestigungsabschnitt und einem Endabschnitt auf, durch die das Abreißen des Endabschnittes nach Beendigung der Umformung des Schließringes möglich ist.

Der Erfindung liegt die Aufgabe zugrunde, einen Befestigungsbolzen und eine Befestigungseinrichtung der eingangs genannten Art zu schaffen, welche sowohl ein lösbares als auch ein unlösbares Befestigen des Schließringes ermöglichen.

Die Aufgabe wird hinsichtlich des Befestigungsbolzens durch die im Anspruch 1 angegebene Erfindung gelöst. Befestigungseinrichtungen zur Lösung der genannten Aufgabe sind in den Ansprüchen 9 bis 15 angegeben.

Nach der Erfindung weist der Befestigungsbolzen in seinem dem Kopf entgegengesetzten Endbereich des Befestigungsabschnittes eine Verriegelungsausnehmung auf, in die der Schließring einformbar ist. Soll der Schließring nach seiner Umformung nicht mehr ohne weiteres lösbar sein, so kann er in die Verriegelungsausnehmung eingeformt werden. Soll hingegen die Lösbarkeit des umgeformten Schließringes erhalten bleiben, so wird bei der Umformung des Schließringes dafür Sorge getragen, daß dieser nicht in die Verriegelungsausnehmung eingeformt wird. Die jeweils gewünschte Umformung kann entweder durch die Gestaltung des Umformwerkzeuges erreicht werden oder durch die Gestaltung des Schließringes, z.B. indem dieser im Bereich der Verriegelungsausnehmung einen verformbaren oder nicht verformbaren Bereich hat oder indem der Schließring sich bis in den Bereich der Verriegelungsausnehmung erstreckt oder nicht erstreckt.

Die Verriegelungsausnehmung des Befestigungsbolzens kann auf einfache Weise als Ringnut ausgebildet sein. Beispielsweise kann die Ringnut in einem Arbeitsprozeß zusammen mit einer ebenfalls als Ringnut ausgebildeten Sollbruchstelle hergestellt werden, die das Abtrennen des Endabschnittes nach dem Umformen des Schließringes ermöglicht. Die Verriegelungsausnehmung kann auch eine andere geometrische Form haben. Beispielsweise kann anstelle einer die Axialbewegung des Schließringes blockierenden Ringnut eine Verriegelungsausnehmung vorgesehen sein, die sich nur über einen Teil des Umfangs des Befestigungsbolzens erstreckt und dadurch das zum Losschrauben erforderliche Drehen des Schließringes relativ zum Befestigungsbolzen verhindert.

Erfindungsgemäß kann weiterhin vorgesehen sein, die Verriegelungsausnehmung hinsichtlich ihrer Tiefe und Formgestalt so zu bemessen, daß durch ein bestimmtes, auf den Schließring einwirkendes Drehmoment der in die Verriegelungsausnehmung eingeformte Teil des Schließringes wieder aus der Verriegelungsausnehmung herausgedrückt werden kann. Auf diese Weise wird eine lösbare Befestigungseinrichtung geschaffen, die gegen selbsttätiges Lösen gesichert ist.

Um das beim Lösen und gegebenenfalls erneuten Befestigen des Schließringes auf den Befestigungsbolzen einwirkende Reibmoment abstützen zu können, weist der Kopf des Befestigungsbolzens vorzugsweise eine Schlüsselfläche zum Ansetzen eines Werkzeuges auf. Auch der Schließring ist zum Übertragen des Löse- oder Anzugsmomentes vorzugsweise mit einer Schlüsselfläche versehen.

Damit der Befestigungsbolzen auch durch Schweißen an einem Bauteil befestigt werden kann, weist der Kopf erfindungsgemäß einen Ansatz auf, der eine als stumpfwinklige Kegelspitze geformte Stirnfläche hat. Hierdurch kann der Bolzen mittels Lichtbogen-Hubzündungsschweißen auf einfache Weise mit einem Bauteil verbunden werden.

Die Erfindung wird nachfolgend anhand eines Ausführungsbeispiels näher erläutert, das in der Zeichnung dargestellt ist. Es zeigen
- Figur 1: eine Seitenansicht eines Befestigungsbolzens nach der Erfindung,
- Figur 2: eine Stirnansicht des Kopfes des Befestigungsbolzens gemäß Figur 1,
- Figuren 3a bis 3c: verschiedene Stadien des Montagevorgangs einer aus Befestigungsbolzen und Schließring bestehenden, nicht lösbaren Befestigungseinrichtung nach der Erfindung und
- Figuren 4a bis 4c: verschiedene Stadien des Montagevorganges einer aus Befestigungsbolzen und Schließring bestehenden, lösbaren Befestigungseinrichtung nach der Erfindung.

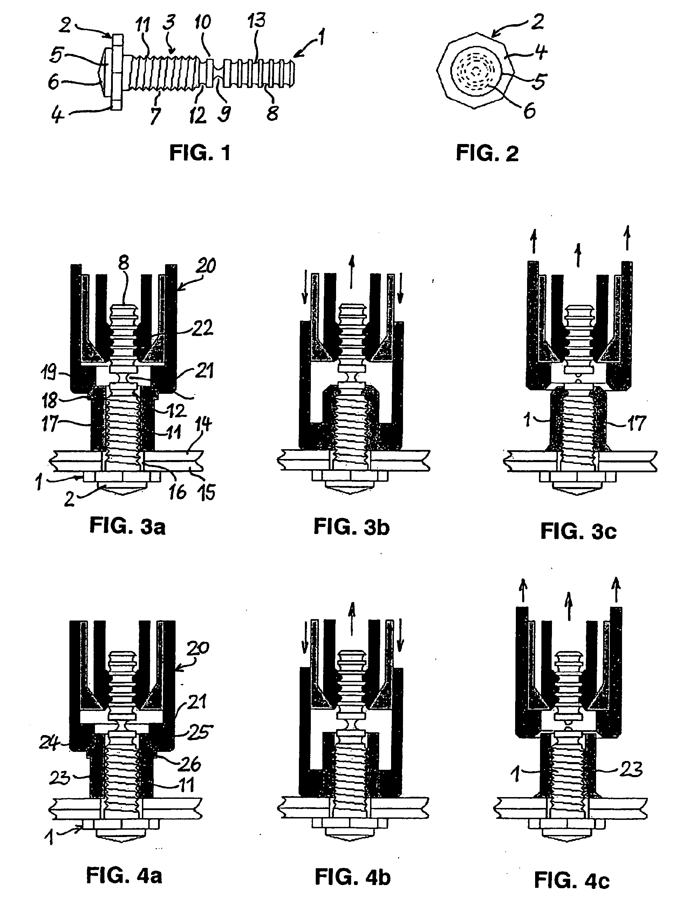

Der in den Figuren 1 und 2 gezeigte Befestigungsbolzen 1 hat einen Kopf 2 und einen Schaft 3. Der Kopf 2 weist einen polygonalen Flansch 4 mit acht Ecken und einen Ansatz 5 auf, dessen Stirnfläche 6 die Form einer stumpfwinkligen Kegelspitze hat. Der Flansch 4 dient zum Ansetzen eines Werkzeuges, beispielsweise eines Schraubenschlüssels, welches zum Festhalten des Befestigungsbolzens 1 gegen Drehen geeignet ist. Mit Hilfe des Ansatzes 5 kann der Befestigungsbolzen 1 an ein Bauteil mittels Hubzündungsschweißens angeschweißt werden.

Der Schaft 3 weist angrenzend an den Kopf 2 einen Befestigungsabschnitt 7 und daran anschließend einen Endabschnitt 8 auf. Zwischen dem Befestigungsabschnitt 7 und dem Endabschnitt 8 befindet sich eine Sollbruchstelle 9 in Form einer tiefer eingestochenen Ringnut. Der Befestigungsabschnitt 7 ist bis auf einen der Sollbruchstelle 9 benachbarten Endbereich 10 mit einem Außengewinde 11 versehen. Der Endbereich 10 hat einen Außendurchmesser, der gleich oder kleiner ist als der Kerndurchmesser des Außengewindes 11. Der Endbereich 10 weist außerdem eine Verriegelungsausnehmung 12 auf, die als Ringnut ausgebildet ist. Der Kernquerschnitt der Verriegelungsausnehmung 12 ist erheblich größer als der Kernquerschnitt der Sollbruchstelle 9.

Der Endabschnitt 8 ist auf seiner Mantelfläche mit parallelen Verankerungsrillen 13 versehen, die zum Übertragen einer Axialkraft auf die Backen eines Umformwerkzeuges dienen. Anstelle von parallelen Rillen, kann der Endabschnitt 8 auch mit einem Außengewinde oder einer anderen zur Kraftübertragung geeigneten Profilierung versehen sein.

In den Figuren 3a bis 3c ist die Verwendung des Befestigungsbolzens 1 zur Herstellung einer nicht lösbaren Verbindung von zwei Bauteilen 14, 15 gezeigt. Die Bauteile 14, 15 liegen in dem gezeigten Befestigungsbereich aneinander an und haben miteinander fluchtende Bohrungen 16, durch die der Befestigungsbolzen 1 mit seinem Schaft 3 von einer Seite so weit hindurchgesteckt ist, daß er mit dem Flansch 4 des Kopfes 2 an dem Bauteil 15 anliegt. Auf der anderen Seite ragt der Schaft 3 aus den Bohrungen 16 so weit heraus, daß eine ausreichende Länge des Befestigungsabschnittes 7 zur Befestigung eines Schließringes 17 zur Verfügung steht.

Der Schließring 17 besteht aus einer bleibend verformbaren, zylindrischen Hülse, deren Innendurchmesser im wesentlichen dem Außendurchmesser des Außengewindes 11 des Befestigungsabschnittes 7 entspricht und deren Außendurchmesser größer ist als der Durchmesser der Bohrungen 16. An seinem dem Bauteil 14 abgekehrten Ende hat der Schließring 17 einen nach außen vorspringenden Ringbund 18 mit einer einen Teil der endseitigen Stirnfläche bildenden, etwa in einem Winkel von 45° geneigten Fase 19, die zur Anlage und Zentrierung eines Umformwerkzeuges 20 dient. Die axiale Länge des Schließringes 17 ist so bemessen, daß der Schließring 17 in der Einbaulage den aus dem Bauteil 14 herausragenden Teil des Befestigungsabschnittes 7 umgibt, wobei sich der Ringbund 18 im wesentlichen radial außerhalb der Verriegelungsausnehmung 12 befindet. Bei Bedarf wird die Länge des Schließringes 17 an die Länge des überstehenden Befestigungsabschnittes 7 angepaßt.

Zum festen Verbinden der Bauteile 14, 15 wird der Schließring 17, wie in Figur 3a gezeigt, auf den Befestigungsbolzen 1 aufgesteckt und anschließend das Umformwerkzeug 20 an den Schließring 17 und den Befestigungsbolzen 1 angesetzt. Das Umformwerkzeug 20 stützt sich mit der Umformhülse 21 an der Fase 19 des Schließringes 17 ab und umgreift mit seinen Spannbacken 22 den Endabschnitt 8. Zum Umformen des Schließringes 17 wird die Umformhülse 21 mit einer von dem Umformwerkzeug 20 erzeugten Kraft in Richtung auf die Bauteile 14, 15 bewegt, wobei die auf das Umformwerkzeug 20 einwirkende Gegenkraft über die Spannbacken 22 an dem Endabschnitt 8 abgestützt wird. Durch den Umformvorgang wird der Schließring 17 in radialer Richtung gestaucht und in die Verriegelungsausnehmung 12 sowie in die Rillen des Außengewindes 11 eingeformt. Wenn die Umformhülse 21, wie in Figur 3b gezeigt, an dem Bauteil 14 anliegt, wird die von dem Umformwerkzeug 20 ausgeübte Axialkraft weiter erhöht, bis die Sollbruchstelle 9 bricht und dadurch der Endabschnitt 8 von dem Befestigungsbolzen 1 abgetrennt wird. Anschließend wird, wie aus Figur 3c zu ersehen, das Umformwerkzeug 20 gemeinsam mit dem darin gehaltenen Endabschnitt 8 in axialer Richtung von dem nunmehr den Befestigungsbolzen 1 fest umschließenden Schließring 17 entfernt.

Die auf die beschriebene Weise hergestellte Befestigung ist nicht lösbar, weil der umgeformte Schließring 17 in die Verriegelungsausnehmung 12 eingreift und dadurch verhindert, daß der Schließring 17 relativ zum Befestigungsbolzen 1 gedreht werden kann.

Soll eine lösbare Befestigung unter Verwendung des Befestigungsbolzens 1 hergestellt werden, so ist dies mit einer Gestaltung eines Schließringes 23 möglich, der in Figur 4a gezeigt ist. Bei dem Schließring 23 hat der die Verriegelungsausnehmung 12 des Befestigungsbolzens 1 umgebende Endabschnitt 24 einen Außendurchmesser, der gleich oder kleiner ist als der Innendurchmesser der Umformhülse 21 des Umformwerkzeuges 20. Ein mit einer Fase 25 versehener Ringbund 26, der zur Einleitung des Umformvorgangs dient, befindet sich am Anfang des mit dem Außengewinde 11 versehenen Teils des Befestigungsabschnittes 7. Diese Gestaltung hat zur Folge, daß bei der Umformung der Schließring 23 nur in die Rillen des Außengewindes 11 eingeformt wird, hingegen nicht in die Verriegelungsausnehmung 12 eindringt, wie in den Figuren 4b und 4c gezeigt. Der umgeformte Schließring 23 ist nach Beendigung der Umformung nur mit dem Außengewinde 11 des Befestigungsbolzens 1 in Eingriff. Die Befestigung kann daher durch Drehung des Schließringes 23 relativ zum Befestigungsbolzen 1 wieder gelöst werden.

Die Gestaltung des Schließringes 23 kann andererseits auch zur Herstellung einer nicht lösbaren Befestigung dienen, wenn das Umformwerkzeug so gestaltet wird, daß entweder zu Beginn oder in der Endphase des Umformvorganges der Endabschnitt 24 radial nach innen in die Verriegelungsausnehmung eingeformt wird. Beispielsweise kann mit Hilfe eines in die Bohrung der Umformhülse 21 einsetzbaren Einsatzringes, der einen kleineren Bohrungsdurchmesser als die Umformhülse 21 hat, in einer ersten Umformstufe der Endabschnitt 24 in die Verriegelungsausnehmung 12 eingeformt werden. Anschließend kann dann in einer zweiten Umformstufe nach Entfernen des Einsatzringes der Schließring 23 im Bereich des Außengewindes 11 in der in den Figuren 4a bis 4c gezeigten Weise umgeformt werden. Auf diese Weise ist es mit Hilfe des Befestigungsbolzens 1 und des Schließringes 23 auch möglich, eine nicht lösbare Verbindung herzustellen.

## Patentansprüche

1. Befestigungsbolzen (1) zum Befestigen von wenigstens einem Bauteil (14) an einem anderen (15) mit einem Kopf (2) und einem langgestreckten Schaft (3) der einen mit einem Außengewinde (11) versehenen Befestigungsabschnitt zum Anbringen eines Schließringes (17) und an seinem dem Kopf entgegengesetzten Ende einen Endabschnitt (8) zum Abstützen eines Verformungswerkzeuges zum Verformen des Schließringes (17) aufweist, **dadurch gekennzeichnet, daß** der dem Kopf (2) entgegengesetzte Endbereich (10) des Befestigungsabschnittes (7) eine Verriegelungsausnehmung (12) hat, in die der Schließring (17) einformbar ist.

2. Befestigungsbolzen nach Anspruch 1, **dadurch gekennzeichnet, daß** die Verriegelungsausnehmung (12) die Form einer Ringnut hat.

3. Befestigungsbolzen nach einem der Ansprüche 1 oder 2, **dadurch gekennzeichnet, daß** die Verriegelungsausnehmung (12) sich nur über einen Teil des Umfangs des Befestigungsabschnittes (7) erstreckt.

4. Befestigungsbolzen nach einem der vorhergehenden Ansprüche, **dadurch gekennzeichnet, daß** zwischen dem Befestigungsabschnitt (7) und dem Endabschnitt (8) eine Sollbruchstelle (9) vorgesehen ist.

5. Befestigungsbolzen nach einem der vorhergehenden Ansprüche, **dadurch gekennzeichnet, daß** die Formgestalt und/oder Tiefe der Verriegelungsausnehmung (12) so bemessen ist, daß der in die Verriegelungsausnehmung (12) eingeformte Teil des Schließringes (17) durch ein auf den Schließring (17) einwirkendes Drehmoment aus der Verriegelungsausnehmung (12) herausdrückbar ist.

6. Befestigungsbolzen nach einem der vorhergehenden Ansprüche, **dadurch gekennzeichnet, daß** der Kopf (2) einen Ansatz (5) hat, mit dem der Kopf (2) an einem Bauteil durch Schweißen befestigbar ist.

7. Befestigungsbolzen nach Anspruch 6, **dadurch gekennzeichnet, daß** der Ansatz (5) eine als stumpfwinklige Kegelspitze geformte Stirnfläche (6) hat.

8. Befestigungsbolzen nach einem der vorhergehenden Ansprüche, **dadurch gekennzeichnet, daß** der Kopf (2) eine Schlüsselfläche zum Ansetzen eines Werkzeuges aufweist.

9. Befestigungseinrichtung mit einem Befestigungsbolzen (1) nach einem der vorhergehenden Ansprüche und mit einem Schließring (17), der in die Gewinderillen des Befestigungsabschnittes (7) einformbar ist, **dadurch gekennzeichnet, daß** der Schließring (17) in der Montageposition die Verriegelungsausnehmung (12) im Endbereich (10) des Befestigungsabschnittes (7) des Befestigungsbolzens (1) überdeckt.

10. Befestigungseinrichtung nach Anspruch 9, **dadurch gekennzeichnet, daß** der Schließring (17) in die Verriegelungsausnehmung (12) einformbar ist.

11. Befestigungseinrichtung nach einem der Ansprüche 9 oder 10, **dadurch gekennzeichnet, daß** das den Endbereich (10) umgebende Ende des Schließringes (17) einen nach außen vorspringenden Ringbund (18) aufweist.

12. Befestigungseinrichtung nach Anspruch 9, **dadurch gekennzeichnet, daß** der Schließring (23) einen Umformbereich und einen den Endbereich (10) mit der Verriegelungsausnehmung (12) umgebenden Abschnitt (24) hat, der durch das zur Umformung des Umformbereiches bestimmte Umformwerkzeug nicht umformbar ist.

13. Befestigungseinrichtung nach einem der Ansprüche 9 bis 12, **dadurch gekennzeichnet, daß** der Schließring (17, 23) einen gegenüber seiner Mantelfläche erhabenen Ringbund (18, 26) aufweist, an dem das Umformwerkzeug ansetzbar ist.

14. Befestigungseinrichtung mit einem Befestigungsbolzen nach einem der Ansprüche 1 bis 8 und mit einem Schließring, der in die Gewinderillen des Befestigungsabschnittes einformbar ist, **dadurch gekennzeichnet, daß** der Schließring in der Montageposition den Endbereich mit der Verriegelungsausnehmung des Befestigungsbolzens nicht überdeckt.

15. Befestigungseinrichtung nach einem der vorhergehenden Ansprüche, **dadurch gekennzeichnet, daß** der Schließring (23) eine Schlüsselfläche zum Ansetzen eines Werkzeuges aufweist.

## Claims

1. Fastening bolt (1) for fastening at least one part (14) to another (15), having a head (2) and an elongated shank (3) comprising a fastening section provided with an external thread (11) to attach a closure ring (17) and, at its end opposed to the head, an end section (8) for supporting a forming tool for forming the closure ring (17), **characterized in that** the end portion (10) of the fastening section (7) opposed to the head (2) has a locking recess (12) into which the closure ring (17) is formable.

2. Fastening bolt according to claim 1, **characterized in that** the locking recess (12) has the form of an annular groove.

3. Fastening bolt according to either of claims 1 and 2, **characterized in that** the locking recess (12) extends over only a portion of the circumference of the fastening section (7).

4. Fastening bolt according to any of the preceding claims, **characterized in that** a predetermined breaking point (9) is provided between the fastening section (7) and the end section (8).

5. Fastening bolt according to any of the preceding claims, **characterized in that** the shape and/or the depth of the locking recess (12) is so dimensioned that the portion of the closure ring (17) formed into the locking recess (12) can be forced out of the locking recess (12) by a torque acting on the closure ring (17).

6. Fastening bolt according to any of the preceding claims, **characterized in that** the head (2) has a boss (5) with which the head (2) is fastenable to a part by welding.

7. Fastening bolt according to claim 6, **characterized in that** the boss (5) has a front face (6) in the shape of an obtuse-angled cone.

8. Fastening bolt according to any of the preceding claims, **characterized in that** the head (2) comprises a wrench hold for a tool.

9. Fastening means with a fastening bolt (1) according to any of the preceding claims and with a closure ring (17) formable into the thread of the fastening section, **characterized in that** the closure ring (17) in installed position covers the locking recess (12) in the end portion (10) of the fastening section (7) of the fastening bolt (1).

10. Fastening means according to claim 9, **characterized in that** the closure ring (17) is formable into the locking recess (12).

11. Fastening means according to either of claims 9 and 10, **characterized in that** the end of the closure ring (17) surrounding the end portion (10) comprises an outward projecting annular collar (18).

12. Fastening means according to claim 9, **characterized in that** the closure ring (23) has a portion to be deformed and a section (24) surrounding the end portion (10) with the locking recess (12), which section is not deformable by means of the forming tool intended to deform the portion to be deformed.

13. Fastening means according to any of claims 9 to 12, **characterized in that** the closure ring (17, 23) comprises an annular collar (18, 26) elevated relative to its periphery, to which the forming tool can be applied.

14. Fastening means with fastening bolt according to any of claims 1 to 8 and a closure ring formable into the thread of the fastening section, **characterized in that** the closure ring in the installed position does not cover the end portion with the locking recess of the fastening bolt.

15. Fastening means according to any of the preceding claims, **characterized in that** the closure ring (23) comprises a wrench hold for application of a tool.

## Revendications

1. Goujon de fixation (1) pour fixer au moins un élément (14) à un autre (15) avec une tête (2) et une tige allongée (3) qui présente une partie de fixation munie d'un filetage externe (11) pour installer une bague d'arrêt (17) et à son extrémité opposée à la tête une partie d'extrémité (8) pour supporter un outil de déformation pour déformer la bague d'arrêt (17), **caractérisé en ce que** la région d'extrémité (10) de la partie de fixation (7) opposée à la tête (2) possède un évidement de blocage (12), dans lequel la bague d'arrêt (17) est déformable.

2. Goujon de fixation selon la revendication 1, **caractérisé en ce que** l'évidement de blocage (12) a la forme d'une rainure annulaire.

3. Goujon de fixation selon l'une des revendications 1 ou 2, **caractérisé en ce que** l'évidement de blocage (12) s'étend seulement sur une partie de la périphérie de la partie de fixation (7).

4. Goujon de fixation selon l'une quelconque des revendications précédentes, **caractérisé en ce qu'**entre la partie de fixation (7) et la partie d'extrémité (8) un élément de rupture (9) est prévu.

5. Goujon de fixation selon l'une quelconque des revendications précédentes, **caractérisé en ce que** la forme et/ou la profondeur de l'évidement de blocage (12) est dimensionnée afin que la partie de la bague d'arrêt (17) formée dans l'évidement de blocage (12) soit extractible de l'évidement de blocage (12) par un couple de rotation agissant sur la bague d'arrêt (17).

6. Goujon de fixation selon l'une quelconque des revendications précédentes, **caractérisé en ce que** la tête (2) possède une saillie (5), avec laquelle on peut fixer par soudure la tête (2) à un élément.

7. Goujon de fixation selon la revendication en 6, **caractérisé en ce que** la saillie (5) possède une surface de contact (6) formée en pointe conique à angle obtus.

8. Goujon de fixation selon l'une quelconque des revendications précédentes, **caractérisé en ce que** la tête (2) présente une surface pour une clé pour y adapter un outil.

9. Dispositif de fixation avec un goujon de fixation (1) selon l'une quelconque des revendications précédentes et avec une bague d'arrêt (17) qui est déformable dans les rainures de filetage de la partie de fixation (7), **caractérisé en ce que** la bague d'arrêt (17) dans la position de montage recouvre l'évidement de blocage (12) dans une région d'extrémité (10) de la partie de fixation (7) du goujon de fixation (1).

10. Dispositif de fixation selon la revendication 9, **caractérisé en ce que** la bague d'arrêt (17) est déformable dans l'évidement de blocage (12).

11. Dispositif de fixation selon l'une des revendications 9 ou 10, **caractérisé en ce que** l'extrémité de la bague d'arrêt (17) entourant la région d'extrémité (10) présente une nervure annulaire (18) en saillie vers l'extérieur.

12. Dispositif de fixation selon la revendication 9, **caractérisé en ce que** la bague d'arrêt (23) possède une région de déformation, et une partie (24) entourant la région d'extrémité (10) avec l'évidement de blocage (12) qui n'est pas déformable par l'outil de déformation approprié pour déformer la région de déformation.

13. Dispositif de fixation selon l'une des revendications 9 à 12, **caractérisé en ce que** la bague d'arrêt (17, 23) présente une nervure annulaire (18, 26) en saillie face à sa surface d'enveloppe, à laquelle l'outil de déformation est adaptable.

14. Dispositif de fixation avec un goujon de fixation selon l'une des revendications 1 à 8 et avec une bague d'arrêt, qui est déformable dans les nervures de filetage de la partie de fixation, **caractérisé en ce que** la bague d'arrêt dans la position de montage ne recouvre pas la région d'extrémité avec l'évidement de blocage du goujon de fixation.

15. Dispositif de fixation selon l'une quelconque des revendications précédentes, **caractérisé en ce que** la bague d'arrêt (23) présente une surface pour une clé pour y adapter un outil.
